# EUROPÄISCHE PATENTSCHRIFT

(11) **EP 2 796 737 B1**
(45) Veröffentlichungstag und Bekanntmachung des Hinweises auf die Patenterteilung: **12.07.2017**
(21) Anmeldenummer: 14001401.0
(22) Anmeldetag: 16.04.2014
(51) Int. Cl.: F16C 23/04, B64D 37/04, B64G 1/40, F16C 33/12, F16C 17/18

(54) **Gleitlageranordnung, ihre Verwendung und damit versehener Tank oder Druckbehälter sowie deren Verwendung**
Bearing assembly, use of same and tank or pressure vessel with same and their use
Agencement de palier lisse, son utilisation et réservoir en étant pourvu ou récipient sous pression et son utilisation

(30) Priorität: 23.04.2013 DE 102013007065
(43) Veröffentlichungstag der Anmeldung: 29.10.2014
(73) Patentinhaber: MT Aerospace AG, 86153 Augsburg (DE)
(72) Erfinder: Gökhan, Kutlu, 86447 Aindling (DE)
(74) Vertreter: Grape & Schwarzensteiner

(56) Entgegenhaltungen:
- WO-A1-95/22011
- DE-A1- 3 722 182
- DE-A1-102004 060 591
- DE-A1-102008 029 449
- JP-A- H0 979 261
- A MERSTALLINGER ET AL: "Assessment of Cold Welding between Separable Contact Surfaces due to Impact and Fretting under Vacuum", ESA STR, Nr. ESA STM-279, 1. November 2009 (2009-11-01), Seiten 1-57, XP055149319, NL ISSN: 0379-4067

## Beschreibung

Die Erfindung betrifft im Wesentlichen die Ausgestaltung der Schnitt- oder Kontaktflächen von konstruktiven Elementen einer Gleitlageranordnung, wovon wenigstens eines der Elemente aus Titan, Aluminium oder Legierungen davon miteinander oder mit anderen Metallen besteht. Eine so gestaltete Gleitlageranordnung ist erfindungsgemäß Bestandteil eines Behälters gemäß Anspruch 1.

In der DE 10 2004 060 591 A1 ist ein Behälter beschrieben, wobei der Behälter zum Abfedern von Stößen und zur Vermeidung von Schweißverzügen mit einer speziellen Aufhängungsanordnung ausgestaltet ist.

Titan und seine Legierungen mit Aluminium oder anderen Metallen bilden im Bereich der Luft und Raumfahrt und auch im Maschinenbau eine häufig verwendete Werkstoffgruppe. Grund dafür ist die im Vergleich zu anderen Werkstoffgruppen niedrige Dichte und damit ein niedriges Gewicht bei gleichzeitig hoher Festigkeit. Fertigungstechnisch sind Titan und die meisten Titanlegierungen für die meisten gängigen Prozesse, wie Spanabhebung sowie Umform- und Fügetechniken aller Art, welche auf dem Gebiet der Luft- und Raumfahrt Anwendung finden, geeignet. Andere Eigenschaften von Roh- und Fertigbauteilen aus Titan und Titanlegierungen sind dagegen eher als ungeeignet zu bewerten. So ist aufgrund seiner/ihrer schlechten Gleiteigenschaften nur eine begrenzte Auswahl an Gleitpartnern vorhanden, bei festen Paarungen mit anderen Werkstoffen, wie Edelstahl, besteht die Gefahr einer Kontaktkorrosion oder des Festfressens. Ein Problem kann sich auch aus der niedrigen Druckfestigkeit bzw. Oberflächenhärte ergeben.

In Gesamtkonstruktionen, welche Einzelbauteile aus Titan oder dessen Legierungen umfassen, müssen diese negativ wirkenden Eigenschaften berücksichtigt und durch die Art der Konstruktion vermieden werden. Derzeit werden dazu Schnitt- oder Kontaktstellen zwischen Titan oder Titanlegierungen und anderen Werkstoffen durch die Konstruktion, beispielsweise durch Auswahl bestimmter Werkstoffe oder durch Vergrößern von Kontaktflächen zur Vermeidung von Druckstellen, angepasst. In besonderen Fällen sind der Umgang und die Handhabung der Einzelbauteile während der Montage und/oder des Transports in engen Grenzen durch Handhabungshinweise vorzuschreiben. Das erfordert zum Teil eine eingehende Schulung und Unterweisung von Personal und Anwendern.

Die erfindungsgemäß zum Einsatz kommende Gleitlageranordnung umfasst ein Lagerelement und eine Achse oder Welle, wobei die Achse oder Welle aus insbesondere Titan, Aluminium oder Legierung davon miteinander und/oder mit anderen Metallen besteht.

Das Lagerelement ist so ausgebaut, dass eine Kaltverschweißung mit der Achse oder Welle unter Bedingungen verhindert wird, wie sie insbesondere in der Luft- und Raumfahrt auftreten. Die Gleitlageranordnung bildet ein Loslager, wie es zur Aufhängung beispielsweise von Tanks und Druckbehältern oder für verfahrenstechnische Anlagen allgemein Verwendung findet.

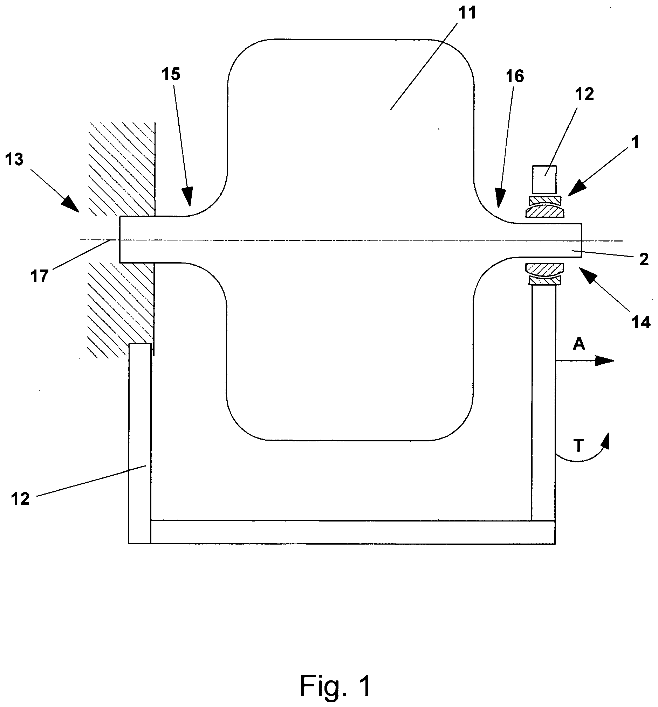

Auf dem Gebiet der Luft- und Raumfahrt ist es derzeit üblich, Tanks oder Hochdrucktanks, zum Aufnehmen, Speichern und Abgeben von gasförmigen, flüssigen und festen Medien mit einem Mantel und an dem Mantel integral angebrachten Lagerzapfen oder Tankstutzen polar, d.h. an den Lagerzapfen oder Tankstutzen, die vorzugsweise an den Polen auf der Längsachse eines solchen Tanks angeordnet sind, aufzuhängen. Eine solche Aufhängung ist in Fig. 1 gezeigt.

Die Aufhängung für einen Tank 11 oder Behälter an/in einer Trägerstruktur 12 umfasst ein sogenanntes Festlager 13 und ein sogenanntes Loslager 14. Das Festlager 13 ist oft als Kugelgelenklager oder als starrer Flansch ausgebildet, der fest mit der Trägerstruktur 12 verschraubt ist. Das Loslager 14 soll zwei Funktionen erfüllen. Das Loslager 14 soll zum einen Unterschiede in der axialen Längenausdehnung gemäß Pfeil A zwischen Tank 11 und Trägerstruktur 12 ausgleichen, welche durch Temperaturunterschiede im Betrieb des Tanks 11 oder bei verschiedenen auftretenden Innendrücken und Temperaturen auftreten können. Das Loslager 14 soll zum anderen Vibrationsbewegungen, d.h. lateral wirkende Kräfte gemäß Pfeil T, wie sie beispielsweise beim Start einer Rakete auftreten, ausgleichen können. Hierzu kommt ein zweiteiliges Lager, bestehend aus einem Lageraußenring bzw. äußeren Ring und einem Lagerinnenring bzw. inneren Ring zum Einsatz, wobei nur der Lageraußenring mit der Trägerstruktur 12 fest verbunden ist. Der Lagerinnenring ist in dem Lageraußenring verschwenkbar zur Lagerung des Tanks 11 aufgenommen.

Übliche Materialien für Lager sind verschiedene Stähle oder auch keramische Materialien. Tanks, die im Bereich der Luft- und Raumfahrt eingesetzt werden, werden überwiegend aus Titan, Aluminium oder Legierung davon miteinander und/oder mit anderen Metallen hergestellt, um den Anforderungen an Festigkeit und Leichtigkeit gleichermaßen zu genügen. Damit kann sich eine Gleitlagerpaarung, bestehend aus Titan, Aluminium oder Legierung davon miteinander und/oder mit anderen Metallen (Achse oder Tankstutzen) und Stahl (Lagerinnenring) ergeben.

Es war und ist bekannt, dass Titan, Aluminium oder Legierung davon miteinander und/oder mit anderen Metallen sehr schlechte Notlaufeigenschaften, d.h. sehr schlechte Gleiteigenschaften (siehe auch weiter oben) ohne zusätzliche Schmierung besitzen. Eine Gleitlagerpaarung aus diesen Materialien und Stahl führt daher zwangsläufig zu einer Kaltverschweißung, so dass sich die beiden Komponenten, Lager und Achse oder Welle bzw. Tankstutzen verklemmen bzw. fressen. Ein Versagen dieser Gleitpaarung ist aber für die Funktion von insbesondere Satellitentanks aber auch anderer verfahrenstechnischer Anlagen mehr als problematisch und es war erforderlich, entweder tank- bzw. anlagenseitig oder lagerseitig etwas zu ändern.

Beispielsweise wurde zur Vermeidung der Kaltverschweißung zwischen einem Tankstutzen aus Titan oder Titanlegierung und einem Lager aus Stahl vorgeschlagen, auf den Titan-Tankstutzen eine "selbstschmierende" Stahlhülse aufzustecken. Stahl auf Stahl gleitet bekanntlich nahezu ohne Probleme. Allerdings erfordert diese Maßnahme einen nicht unerheblichen weiteren Konstruktionsschritt bei der Herstellung der Tanks. Außerdem kann es auch in dieser Kombination zu Ionen- bzw. Partikelbildung kommen.

Aus einer ESA Studie (ESA STM-279 November 2009; Assessment of Cold Welding between Separable Contact Surfaces due to Impact and Fretting under Vacuum; A. Merstallinger, M. Sales, E. Semerad (Austrian Institute of Technology) and B. Dunn (ESA/ESTEC)) lassen sich zur Vermeidung der Kaltverschweißung Beschichtungen der Innenseite von Lagerkomponenten ableiten. Derzeit werden bei neueren Satellitentankprojekten Gleitlagerpaarungen auf der Basis dieser Studie und nach Erfahrungswerten konzipiert. Beispielsweise werden die Lagerinnenseiten mit Polytetrafluorethylen (PTFE), d.h. Teflon, beschichtet, um ein Kaltverschweißen zu unterdrücken. Leider haben die Anforderungstests, die für den Bereich der Luft- und Raumfahrt erfüllt werden müssen, gezeigt, dass Teflon diesen Anforderungen nicht gerecht wird, vielmehr das Material vorzeitig verschleißt bzw. bricht und es so zu einem Versagen der Gleitlagerpaarung kommt.

Für Anwendungsbereiche in der Luft- und Raumfahrt, wie bei Satellitentanks und dergleichen Vorrichtungen, aber auch generell für verfahrenstechnische Anlagen, besteht damit nach wie vor das Bedürfnis, ein für die Gleitlagerpaarung mit Titan, Aluminium oder Legierung davon miteinander und/oder mit anderen Metallen geeignet ausgelegtes Lagermaterial anzugeben.

Bei der Durchführung der in der Luft- und Raumfahrt üblichen Anforderungstests wurde nun erkannt, dass immer zuerst der schwächere, weichere Teil einer Paarung versagt, im vorliegenden Fall die PTFE-Beschichtung und erst dann das Titan bzw. die Titanlegierung, aus welcher der Tank und somit der Tankstutzen gefertigt ist. Daraus wurde die Erkenntnis gewonnen, dass zumindest für die Paarung mit Titan ein Lagermaterial gefunden werden muss, das eine Kaltverschweißung auch unter Bedingungen verhindert, wie sie in der Luft- und Raumfahrt auftreten. Es sollte eine geringere Härte als Titan oder dessen Legierung, wie es für die Herstellung der Tanks verwendet wird, aufweisen.

Gegenstand der vorliegenden Erfindung ist ein Behälter mit den Merkmalen des Anspruchs 1. Die Erfindung nutzt somit die Erkenntnis, dass eine Kontaktkorrosion vermieden werden kann, wenn man Elemente aus Titan, Aluminium oder Legierungen davon miteinander oder mit anderen Metallen und ein anderes, damit in Kontakt stehendes oder damit verbundenes oder verbindendes Element aus einem Material kombiniert oder mit einem solchen Material ausrüstet ist, das eine geringere Härte als Titan oder die Titanlegierung aufweist.

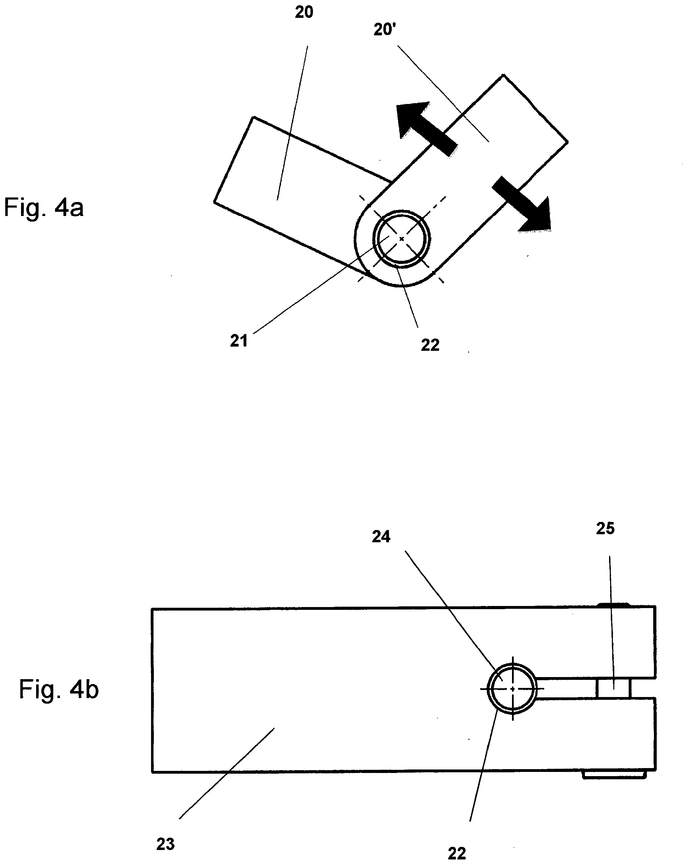

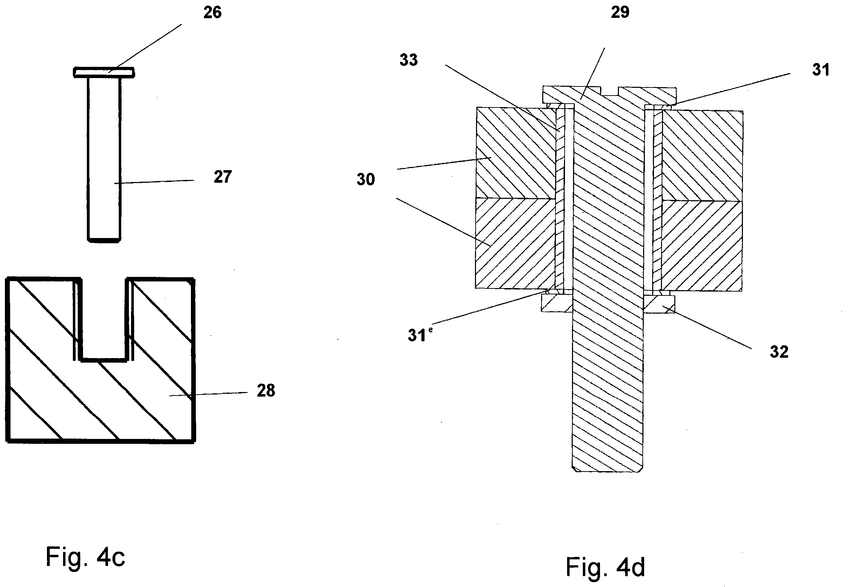

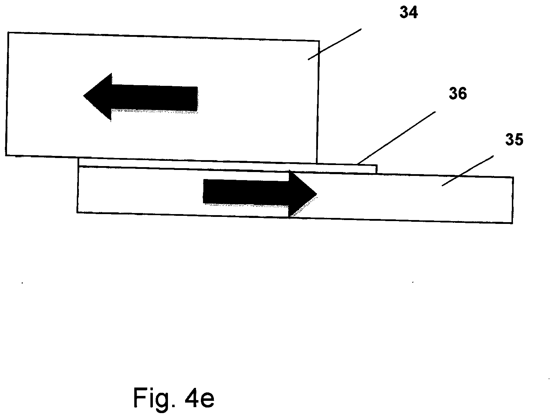

Eine solche Schnitt- und Kontaktflächenpaarung ist als Schraubverbindung oder Klemmverbindung in den Figuren 4 beschrieben.

Ein solches Material muss in seiner Paarung mit Titan, Aluminium oder Legierung davon miteinander und/oder mit anderen Metallen besondere Anforderungstests erfüllen, nämlich über wenigstens 11.000 Testzyklen eine seitliche, d.h. laterale Last von 1 kN sowie eine Schwingungsamplitude von +/- 7 mm bei einer Frequenz von 40 Hz, ohne das Auftreten einer Kaltverschweißung.

Das Zwischenelement oder die Zwischenschicht besteht somit aus einem Material, das eine geringere Härte als die oben erwähnten Materialien der Achse oder Welle besitzt. Damit lässt sich ein voreiliger Verschleiß dieses Materials und damit ein vorzeitiges Versagen der Gleitlageranordnung vermeiden.

Erfindungsgemäß ist das Zwischenelement oder die Zwischenschicht vollständig oder wenigstens teilweise aus einer in Sinterbronze eingebetteten Teflon/Faser-Mischung ausgebildet. Als Fasermaterial sind beispielsweise Glasfasern oder auch keramische Fasern zu erwähnen. Unter Sinterbronze werden im Rahmen der vorliegenden Erfindung hauptsächlich Zinn-Bronzen verstanden, deren Porosität die Einlagerung der PTFE/FaserMischung gestattet. Das PTFE/Faser-Gemisch verhindert einen Ionenaustritt aus der Sinterbronze. Die Schicht aus Sinterbronze, PTFE und Glasfasern oder Keramikfasern sollte vorzugsweise innenseitig mit einem dünnen PTFE- oder Keramikfilm abschließen, um einen möglichen Ionentransport noch besser zu verhindern.

Vorzugsweise ist das Zwischenelement in diesem Zusammenhang als Buchse oder Hülse ausgebildet. Derartige Buchsen sind im Handel zwar grundsätzlich erhältlich (z.B. CSB-50 Steel Bronze Powder with PTFE/Fibre Dry Bearing). Nicht bekannt ist jedoch ihre Anwendung in Kombination mit Lager- oder Tankstutzen aus Titan, respektive den vorher genannten Materialien, also in der Gleitlageranordnung mit diesen Materialien bzw. Legierungen. Eben diese Gleitlageranordnung, insbesondere aus Titanlegierung und der angegebenen Sinterbronze führte zu völlig unerwarteten Ergebnissen bei den Anforderungstests. Die Anforderungen, wie sie für Anwendungen in der Luft- und Raumfahrt gefordert werden, wurden nicht nur erfüllt, sondern um ein Vielfaches übertroffen. So hält die erfindungsgemäße Gleitlageranordnung 1,5 kN über 200.000 Testzyklen.

Alternativ dazu liegt es ebenso im Rahmen der Erfindung, dass das Zwischenelement als Schicht an bzw. auf einer Oberfläche des Lagerelementes oder der Buchse oder Hülse, welche der Achse oder Welle zugewandt ist, anzubringen.

Gleichfalls bevorzugt denkbar ist auch, das Zwischenelement als Teil des Lagerelementes auszubilden und z.B. den Lagerinnenring als Zwischenelement einzusetzen, der vollständig aus dem oben genannten Bronze-Material gefertigt ist.

Für bestimmte Anwendungen ist auch ein Zwischenelement bzw. eine Beschichtung nur aus der genannten Sinterbronze möglich. Da in diesem Fall jedoch eine Ionen- und Partikelwanderung auftreten kann, ist eine Schädigung elektronischer Komponenten durch geeignete zusätzliche Maßnahmen zu vermeiden.

In einer bevorzugten Ausführungsform der vorliegenden Erfindung ist das Lagerelement zweiteilig ausgebildet und umfasst einen Lageraußenring und einen Lagerinnenring, derart, dass die Achse oder Welle axial beweglich gelagert ist. Die Erfindung ist damit mit allen herkömmlich verfügbaren Ausgestaltungen von Gleitlageranordnungen bzw. (sphärisch gekrümmten) Axialgleitlagern verwirklichbar, in dem lediglich ein Zwischenelement aus einem Material mit den oben beschriebenen Eigenschaften eingefügt wird.

Damit die Gleitlageranordnung auch lateral einwirkende Kräfte ausgleichen bzw. ableiten kann, wie das im Rahmen der vorliegenden Erfindung ebenfalls erforderlich sein kann, besitzt der Lageraußenring eine wenigstens teilweise sphärisch gekrümmte Innenfläche und der Lagerinnenring eine wenigstens teilweise sphärisch gekrümmte Außenfläche, derart, dass die Achse oder Welle axial und/oder lateral beweglich und verschwenkbar gelagert ist. Indem das oben beschriebene Zwischenelement eingefügt ist, werden sowohl axiale Längenänderungen als auch laterale Krafteinwirkungen in idealer Weise kompensiert, während gleichzeitig die erfindungsgemäße Gleitlageranordnung vor einer Kaltverschweißung geschützt wird, und zwar unter den extremen Bedingungen, denen solche Komponenten beispielsweise in der Luft- und Raumfahrt ausgesetzt sind.

In einer weiteren bevorzugten Ausführungsform der vorliegenden Erfindung umfasst das Lagerelement einen Lageraußenring mit einer wenigstens teilweise sphärisch gekrümmten Innenfläche und bildet das Zwischenelement einem zu dem Lageraußenring korrespondierenden Lagerinnenring mit einer wenigstens teilweise sphärisch gekrümmten Außenfläche, zur axial und/oder gleichzeitig lateral beweglichen Lagerung der Achse oder Welle bzw. des Tankstutzens. So kann das Zwischenelement beispielsweise aus einem sphärisch nach außen gekrümmten Stahlring aufgebaut sein, der innen mit der oben beschriebenen Schicht aus der in Sinterbronze eingebetteten PTFE/Faser-Mischung versehen ist. Die damit einhergehende Bauteil-Verminderung führt zu einer zusätzlichen Gewichts- und Kostenreduktion.

Im Rahmen der vorliegenden Erfindung ist die Achse oder Welle vorzugsweise hohlprofiliert ausgebildet. Die Gleitlageranordnung dient zur Aufhängung von Tanks zum Aufnehmen, Speichern und Abgeben von gasförmigen, flüssigen und festen Medien dienen. Die Achse oder Welle entspricht dabei den polseitig angeordneten Tankstutzen, insbesondere den Tankbefüllungs- oder Tankentleerungsstutzen, die nicht nur der Aufhängung der Tanks, sondern auch deren Befüllung mit oder Abgabe von Medien, insbesondere Treibstoffen, dienen.

Die hohlprofilierte Achse ist somit Teil eines Tanks, der gemäß den Anforderungen in der Luft- und Raumfahrt aus vorzugsweise Titan, Aluminium oder Legierung davon miteinander und/oder mit anderen Metallen gebildet bzw. aufgebaut oder konstruiert ist.

Die Erfindung betrifft schließlich die Verwendung eines Behälters oder Druckbehälters zum Aufnehmen, Speichern und Abgeben von gasförmigen, flüssigen und festen Medien gemäß den Ansprüchen 11 bis 13.

Weitere Vorteile und Einzelheiten der Erfindung ergeben sich aus der nachfolgenden Beschreibung von bevorzugten Ausführungsformen der Erfindung sowie anhand der Zeichnungen. Hierbei zeigen:
- Fig. 1: eine schematische, teilweise abgebrochene Längsschnittansicht durch einen in einer Trägerstruktur gehaltenen Tank mit einer erfindungsgemäß ausgebildeten Gleitlageranordnung,
- Fig. 2: eine schematische, teilweise abgebrochene Längsschnittansicht durch eine erste Ausführungsform einer erfindungsgemäß ausgebildeten Gleitlageranordnung nach der Fig. 1 im Bereich des Loslagers, in vergrößerter Darstellung, und
- Fig. 3: eine schematische, teilweise abgebrochene Längsschnittansicht durch eine zweite Ausführungsform einer erfindungsgemäß ausgebildeten Gleitlageranordnung entsprechend der Fig. 2 im Bereich des Loslagers, in vergrößerter Darstellung.
- Fig. 4a bis 4d: weitere lediglich beispielhafte Anwendungsbeispiele für die beschriebene Kontaktflächenpaarung mit Titan oder Titanlegierungen.

Bei der nachfolgenden Beschreibung von Ausführungsbeispielen der erfindungsgemäßen Schnitt- oder Kontaktflächenpaarung, insbesondere der Gleitlageranordnung sind einander entsprechende, gleiche Bauteile jeweils mit identischen Bezugsziffern versehen. Diese Beschreibung bezieht sich zwar ausschließlich auf Satellitentanks aus Titanlegierungen, soll aber nicht darauf beschränkt verstanden werden.

Fig. 1 zeigt schematisch einen zylindrischen Tank 11, der in einer Trägerstruktur 12 gehalten bzw. aufgehängt und mit jeweils polseitig angeordneten Tankstutzen 15, 16 oder dergleichen Achsen bzw. gegebenenfalls Wellen versehen ist. Über die Tankstutzen 15, 16, die jeweils polseitig entlang der Mittellängsachse 17 des zylindrischen Tanks 11 angeformt bzw. ausgeformt sind, ist der Tank 11 in der Trägerstruktur 12 gelagert. Der Tank 11 und die Tankstutzen 15, 16 sind aus Titan bzw. einer Titanlegierung gebildet.

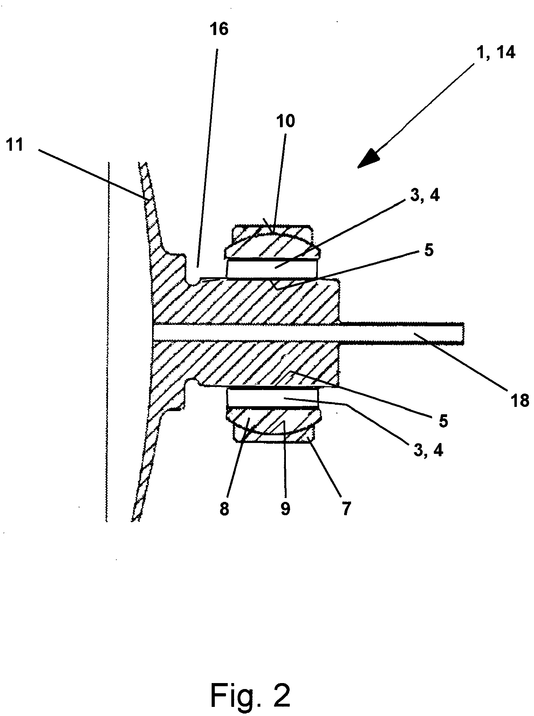

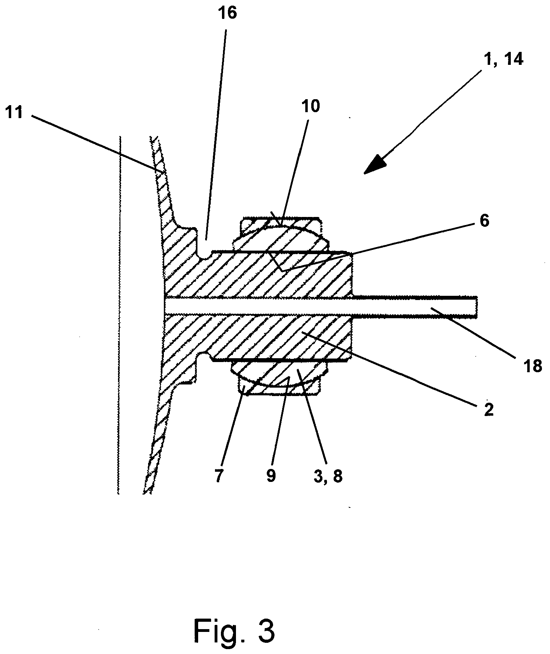

Die Tankstutzen 15, 16 dienen gleichzeitig der Befüllung und Entnahme von z.B. Treibstoff und sind deshalb hohlprofiliert ausgebildet (hier nicht dargestellt). Wie in den Fig. 2 und 3 dargestellt ist, ist der Tankstutzen 16 insoweit mit einem Durchlass 18 versehen.

Über ein Festlager 13 und den Tankstutzen 15 ist der Tank 11 fest und starr mit der Trägerstruktur 12 verbunden. Über ein Loslager 14 und den Tankstutzen 16 ist der Tank 11 mit der Trägerstruktur 12 beweglich verbunden bzw. beweglich in dieser gehalten. Sinn des Loslagers 14 ist es, zum einen etwa durch große Temperaturunterschiede verursachte Unterschiede in der axialen Längenausdehnung gemäß Pfeil A zwischen Tank 11 und Trägerstruktur 12 und zum anderen Vibrationsbewegungen, also lateral angreifende Kräfte gemäß Pfeil T zwischen Tank 11 und Trägerstruktur 12, beispielsweise beim Raketenstart, zu kompensieren.

Entsprechend der Fig. 1 ist das Loslager 14 aus einem Lagerelement 1 gebildet, das einen Lageraußenring 7 bzw. äußeren Ring und einen Lagerinnenring 8 bzw. inneren Ring umfasst. Nur der Lageraußenring 7 ist mit der Trägerstruktur 12 fest verbunden, wohingegen der Lagerinnenring 8 beweglich in diesem gelagert oder gehalten ist. Der Lagerinnenring 8 ist auch nicht fest mit dem Tankstutzen 16 verbunden, so dass der Tankstutzen 16 in dem Lagerinnenring 8 zumindest axial beweglich gehalten ist. Das Loslager 14 ist üblicherweise aus Stahl gefertigt.

Zur Vermeidung einer Kaltverschweißung von Loslager 14 aus Stahl und Tankstutzen 16 aus Titan oder einer Legierung daraus ist ein Material vorgeschlagen, das jegliche Kaltverschweißung unter Bedingungen verhindert, wie sie in der Luft- und Raumfahrt, beispielsweise beim Start einer Satellitenrakete auftreten. Dieses Material ist erfindungsgemäß weniger hart als die für die Tankkonstruktion verwendete Titanlegierung. Das Material ist vorzugsweise eine in Sinterbronze eingebettete Teflon/Faser-Mischung, wobei die Sinterbronze üblicherweise eine Zinn-Kupfer-Bronze ist und die Fasern Glas- oder Keramikfasern sind.

In den Fig. 2 und 3 sind zwei bevorzugte Ausführungsformen einer erfindungsgemäßen Gleitlageranordnung bzw. Gleitlagerpaarung dargestellt.

Der Tankstutzen 16 umfasst einen Zapfen oder dergleichen Flansch, der eine Achse 2 oder Welle zur Lagerung des Tanks 11 bildet.

Das Loslager 14 ist als Lagerelement 1 in Form eines Axialgleitlagers ausgebildet, bestehend aus einem Lageraußenring 7 mit einer wenigstens teilweise sphärisch gekrümmten Innenfläche 9 und einem Lagerinnenring 8 mit einer wenigstens teilweise sphärisch gekrümmten Außenfläche 10. Solche Axialgleitlager dienen zur Kompensation axial und/oder lateral wirkender Kräfte.

Bei der ersten Ausführungsform der vorliegenden Erfindung, die in der Fig. 2 gezeigt ist, weist die Gleitlageranordnung ein handelsübliches, zweiteiliges Lagerelement 1 (Axialgleitlager), bestehend aus einem Lageraußenring 7 mit sphärisch gekrümmter Innenfläche 9 und einem Lagerinnenring 8 mit sphärisch gekrümmter Außenfläche 10 auf. Lageraußenring 7 und Lagerinnenring 8 sind üblicherweise aus Stahl gefertigt, wobei der Lagerinnenring 8 kalottenförmig in den Lageraußenring 7 eingepasst ist.

Zwischen das Lagerelement 1 und die Achse 2 oder Welle des Tankstutzens 16 ist ein Zwischenelement 3 eingefügt. Das Zwischenelement 3 ist aus einem Material gebildet, das eine Kaltverschweißung mit der Achse 2 unter Bedingungen verhindert, wie sie in der Luft- und Raumfahrt auftreten. Das Material weist dabei eine geringere Härte auf, als die zur Fertigung des Tanks 11 verwendete Titanlegierung. Es ist vorzugsweise die bereits beschriebene Sinterbronze, in welche eine PTFE/Faser-Mischung eingebettet ist. Die Fasern sind vorzugsweise Glasfasern oder Keramikfasern. Das PTFE/Faser-Gemisch verhindert einen Ionenaustritt aus der Sinterbronze. Auf dieser Materialschicht kann zusätzlich eine dünne Teflon- oder Keramikschicht vorgesehen sein, um einen Ionenaustritt noch besser zu verhindern.

Das Zwischenelement 3 ist entweder vollständig oder wenigstens teilweise aus einer in Sinterbronze eingebetteten Teflon/Faser-Mischung ausgebildet.

Das Zwischenelement 3 ist bei der Ausführungsform der Fig. 2 als Buchse 4 oder Hülse ausgebildet. Die Buchse 4 wird in das Lagerelement 1 eingepresst. Dazu muss das Lagerelement 1 gegebenenfalls ausgearbeitet werden, um seinen Innendurchmesser an den Außendurchmesser der Buchse 4 anzugleichen. Die Methodik hierzu ist im Prinzip im Stand der Technik bekannt und wird daher hier nicht näher erläutert.

Die als Zwischenelement 3 gemäß der Ausführungsform von Fig. 2 verwendete Buchse 4 ist insgesamt aus Sinterbronze und dem darin eingebetteten PTFE/Faser-Gemisch aufgebaut.

Alternativ dazu ist es gleichermaßen möglich, das Zwischenelement 3 in Form einer Buchse 4 oder Hülse mit einem Mantel aus Metall, vorzugsweise Stahl, auszugestalten. Der Mantel der Buchse 4 ist dann an bzw. auf der Oberfläche 5 der Buchse 4, welche der Achse 2 oder Welle zugewandt ist bzw. mit dieser in Kontakt steht, mit einer Schicht von dem vorher beschriebenen Material ausgelegt bzw. Überzogen/beschichtet.

Anstelle einer Buchse 4 als Zwischenelement 3 - egal ob vollständig oder wenigstens teilweise aus Sinterbronze und dem darin eingebetteten Teflon/Faser-Gemisch gebildet - kann das Zwischenelement 3, ohne im Einzelnen dargestellt zu sein, ebenso unmittelbar an bzw. auf der Oberfläche 6 des Lagerinnenringes 8, welche der Achse 2 oder Welle zugewandt ist bzw. mit dieser in Kontakt steht, in Form einer Schicht aus dem vorher beschriebenen Material aufgebracht sein. Die Schicht ist mit anderen Worten direkt an bzw. auf der der Achse 2 zugewandten Oberfläche 6 des Lagerinnenringes 8 angebracht. Das Zwischenelement 3 stellt somit einen Teil des Lagerelementes 1 selbst dar.

Bei der zweiten Ausführungsform der vorliegenden Erfindung, die in Fig. 3 dargestellt ist, ist eine Gleitlageranordnung vorgeschlagen, bei welcher das Zwischenelement 3 ebenfalls als Teil des Lagerelementes 1 ausgebildet ist. Dabei umfasst das Lagerelement 1 einen Lageraußenring 7 mit einer wenigstens teilweise sphärisch geformten Innenfläche 9. Der kalottenförmige Lagerinnenring 8 mit einer wenigstens teilweise sphärisch geformten Außenfläche 10, der zu dem Lageraußenring 7 korrespondiert, ist bei diesem Ausführungsbeispiel gänzlich durch ein ebenso gestaltetes Zwischenelement 3 aus Sinterbronze ersetzt, in welche das PTFE/Faser-Gemisch eingebettet ist. Mit anderen Worten ist erfindungsgemäß ein Axialgleitlager bzw. Loslager 14 zur Verfügung gestellt, das einen Lageraußenring 7 mit sphärisch gekrümmter Innenfläche 9 aus Stahl oder dergleichen Metall aufweist. In diesem Lageraußenring 7 ist als Lagerinnenring 8 ein Zwischenelement 3 gehalten bzw. gelagert, wovon wenigstens die der Achse 2 zugeordnete Oberfläche 6 aus einem Material gebildet ist, das eine Kaltverschweißung mit der Achse 2 unter Bedingungen verhindert, wie sie in der Luft- und Raumfahrt auftreten. Dieses Material weist eine geringere Härte auf, als die Achse 2 aus Titanlegierung. Es handelt sich vorzugsweise um Sinterbronze, in welche ein wie oben beschriebenes PTFE/Faser-Gemisch eingebettet ist.

Hierzu ist es wieder möglich, dass das Zwischenelement 3 insgesamt aus der Sinterbronze, in welche ein wie oben beschriebenes PTFE/Faser-Gemisch eingebettet ist, zu verwenden. Diese Gleitlageranordnung ist ein ebenfalls bevorzugter Gegenstand der Erfindung, da dadurch eine optimale Anpassung an vorgegebene Dimensionen der Achse 2 eines Tankstutzens 16 möglich ist.

Mit jeder der zwei Ausführungsformen wird in jedem Fall eine optimale Anpassung des Materials der Gleitlageranordnung an ein zu lagerndes Element aus einer Titanlegierung zur Verfügung gestellt. Die Paarung der Sinterbronze mit darin eingebettetem PTFE/Faser-Gemisch mit der Titanlegierung erfüllt nicht nur die für Anwendungen in der Luft- und Raumfahrt geltenden Anforderungen, nämlich über wenigstens 11.000 Testzyklen eine seitliche, d.h. laterale, Last von 1 kN sowie eine Schwingungsamplitude von +/- 7 mm bei einer Frequenz von 40 Hz, ohne das Auftreten einer Kaltverschweißung. Es werden sogar 1,5 kN über 200.000 Zyklen realisiert.

Die erfindungsgemäße Gleitlageranordnung ist somit zur Lagerung und Halterung verschiedenster Komponenten für die Luft- und Raumfahrt prädestiniert, insbesondere aber nicht beschränkt auf Satellitentanks.

Die erfindungsgemäße Gleitlageranordnung ist zum Aufnehmen und Lagern von Behältern, insbesondere von Druckbehältern, Tanks oder Hochdrucktanks, zum Aufnehmen, Speichern und Abgeben von gasförmigen, flüssigen und festen Medien, insbesondere von kryogenen Fluiden, vorzugsweise von Sauerstoff und Wasserstoff geeignet, in Fahrzeugen, insbesondere in Luftfahrzeugen oder Fluggeräten der Luft- und Raumfahrt, vorzugsweise in Flugzeugen und Raumflugkörpern, insbesondere in Wasserfahrzeugen, vorzugsweise in einem U-Boot oder Luftkissenfahrzeug (Hovercraft), oder insbesondere in Landfahrzeugen, vorzugsweise in einem Personenkraftwagen, Lastkraftwagen oder Wohnmobil.

Die erfindungsgemäße Gleitlageranordnung ist zum Aufnehmen und Lagern von Behältern, insbesondere von Druckbehältern, Tanks oder Hochdrucktanks, zum Aufnehmen, Speichern und Abgeben von gasförmigen, flüssigen und festen Medien geeignet, in Luftfahrzeugen oder Fluggeräten der Luft- und Raumfahrt, vorzugsweise in Flugzeugen und Raumflugkörpern, Raketen und/oder Satelliten, oder in besonders reinen oder sauberen Umgebungen, insbesondere im Vakuum oder in einem Reinraum.

Die erfindungsgemäße Gleitlageranordnung ist insgesamt auch zur Lagerung verschiedenster Komponenten in verfahrenstechnischen Anlagen jeder Art geeignet, da sie über eine lange Lebensdauer aufgrund des geringen Verschleißes verfügt.

In den Fig. 4a bis 4e sind wie erwähnt weitere lediglich beispielhafte Anwendungsbeispiele für die erfindungsgemäße Schnitt- oder Kontaktflächenpaarung mit Titan oder Titanlegierungen schematisch dargestellt.

Die Fig. 4a zeigt darin die Anordnung von zueinander beweglich angeordneten Achsschenkeln 20, 20'. Die Achsschenkel 20, 20' sind aus Titan oder einer wie oben definierten Titanlegierung ausgebildet und über einen Bolzen 21 derart miteinander verbunden, dass sie zueinander verschwenkbar sind. Dazu ist eine, wenn auch begrenzte, Rotationsbewegung erforderlich, die zu einem voreilenden Verschleiß zwischen Achsschenkel und Bolzen führen könnte. Die Bauteile fressen sich fest.

Zur Vermeidung dieses Problems kann eine die Achsschenkel 20, 20' durchdringende Buchse 22 vorgesehen sein. Die Buchse 22 liegt zwischen der Innenwand der in den Achsschenkeln 20, 20' vorgesehenen Bohrung und dem zum Verbinden und Verschwenken angeordneten Bolzen 21. Die Buchse 22 besteht aus Sinterbronze mit darin eingebettetem und wie oben definierten PTFE/Faser-Gemisch, wodurch ein voreilender Verschleiß und ein Fressen der Schnitt- oder Kontaktfläche zwischen Titan/Titanlegierung und dem Bolzen 21, der beispielsweise aus Edelstahl besteht, verhindert wird. Die Buchse 22 kann dazu vollständig aus Sinterbronze mit darin eingebettetem und wie oben definierten PTFE/Faser-Gemisch bestehen oder auf wenigstens deren Außenseite damit beschichtet sein.

Ein weiteres Anwendungsbeispiel ist eine Klemmverbindung, die in Fig. 4b gezeigt ist. In einem Bauteil 23 aus Titan oder wie oben definierten Titanlegierung ist ein Bolzen 24, beispielsweise aus Edelstahl, mit Hilfe einer Schraube 25 verklemmt. Der Bolzen 24 wird dazu in einer Buchse 22 aus Sinterbronze mit darin eingebettetem und wie oben definierten PTFE/Faser-Gemisch gelagert. Damit lässt sich eine Kontaktkorrosion und damit Verschleiß verhindern. Darüber hinaus kann sich der mit der Buchse 22 aus Sinterbronze mit darin eingebettetem PTFE/Faser-Gemisch umhüllte Bolzen 24, der in dem Bauteil 23 zu seiner Aufnahme vorgesehenen Ausnehmung größenmäßig anpassen, da die Buchse 22 aus einem weicheren Material besteht und damit einem eventuellen Anpressdruck nachgeben kann, ohne dass dabei das Bauteil 23 deformiert würde.

In den Fig. 4c und 4d sind zwei Ausführungen von Schraubverbindungen gezeigt, in denen das erfindungsgemäße Prinzip der Schnitt- oder Kontaktflächenpaarung verwirklicht ist.

Gemäß Fig. 4c wird in ein Bauteil 28 aus Titan, Aluminium oder Legierungen davon miteinander oder mit anderen Metallen eine herkömmliche Schraube 26 eingesetzt. Die Schraube 26 weist ein hier nicht dargestelltes Außengewinde 27 auf. Das Außengewinde 27 ist auf der herkömmlichen Schraube aus Sinterbronze mit darin eingebettetem und wie oben definierten PTFE/Faser-Gemisch ausgebildet.

Im Rahmen der vorliegenden Erfindung liegt auch eine Schraube, deren Gewinde aus Sinterbronze mit darin eingebettetem PTFE/Faser-Gemisch aufgebaut ist bzw. besteht. Solche Schrauben sind damit im Bereich der Luft- und Raumfahrt, aber auch im allgemeinen Maschinenbau einsetzbar, wenn immer Bauteile aus Titan, Aluminium oder Legierungen davon miteinander oder mit anderen Metallen zum Einsatz kommen. Das Risiko einer Verletzung des Titanmaterials durch das Gewinde der Schraube ist aufgrund der Beschichtung aus Sinterbronze mit darin eingebettetem PTFE/Faser-Gemisch aus den angegebenen Gründen deutlich reduziert.

Eine andere sehr einfache Schraubverbindung ist in der Fig. 4d gezeigt. Zwei beispielsweise plattenförmige Bauteilelemente 30 aus Titan, Aluminium oder Legierungen davon miteinander oder mit anderen Metallen werden mittels einer Schraube 29 und einer Mutter 32 verbunden. Schraube 29 und Mutter 32 können aus herkömmlichem Material, beispielsweise Stahl, bestehen. Zur Verhinderung von Kontaktkorrosion, Verschleiß und/oder Fressen, wird eine Buchse 33 aus Sinterbronze mit darin eingebettetem und wie oben definierten PTFE/Faser-Gemisch in den in den Bauteilelementen 30 zu deren Verbindung vorgesehenen Ausnehmungen eingesetzt. An den Auflagestellen von Schraubenkopf und Mutter 32 sind Beilagscheiben 31 aus Sinterbronze mit darin eingebettetem und wie oben definierten PTFE/Faser-Gemisch zwischen gelegt, sodass die Schraube 29 und die Mutter 32 mit dem Bauteilelementen 30 aus Titan, Aluminium oder Legierungen davon miteinander oder mit anderen Metallen nicht unmittelbar in Kontakt kommt. Wieder wird damit voreilender Verschleiß, Kontaktkorrosion und Fressen vermieden. Gleichzeitig ist die Handhabung bzw. Konstruktionsweise wesentlich vereinfacht, sodass keine gesonderten Anweisungen oder gar Schulungen von Personal oder Anwendern erforderlich wird.

Ein weiterer möglicher Anwendungsfall ist schließlich in der Fig. 4e gezeigt. Im Bereich der Luft- und Raumfahrt können bekanntlich große Temperaturunterschiede auftreten, insbesondere zwischen übereinanderliegenden konstruktiven Bauteilelementen, die aber im Einsatz zu einem gewissen Maß gegeneinander beweglich bleiben müssen. In der Fig. 4e sind schematisch zwei solche, beispielsweise plattenförmige Bauteilelemente 34 und 35 gezeigt. Diese Bauteilelemente können beide aus Titan, Aluminium oder Legierungen davon miteinander oder mit anderen Metallen oder aus diesen Werkstoffen und einem weiteren metallischen oder keramischen Werkstoff bestehen. Zur Verbesserung der Gleitfähigkeit gegeneinander ist hier eine Platte 36 aus Sinterbronze mit darin eingebettetem und wie oben definierten PTFE/Faser-Gemisch vorgesehen.

Die vorliegende Erfindung soll nicht auf die hier beschriebenen Ausführungsformen und Anwendungsfälle beschränkt werden. Vielmehr gilt der allgemeine Gedanke der Bereitstellung eines Schnittstellen- oder Kontaktpartners für Bauteilelemente aus Titan, Aluminium oder Legierungen davon miteinander oder mit anderen Metallen, wobei der wie auch immer konstruktiv gestaltete Kontaktpartner aus einem im Vergleich dazu weicheren Material, vorzugsweise aus Sinterbronze mit darin eingebettetem und wie oben definierten PTFE/Faser-Gemisch besteht oder zumindest teilweise damit ausgerüstet ist.

## Patentansprüche

1. Tank oder Druckbehälter, insbesondere Hochdrucktank, zum Aufnehmen, Speichern und Abgeben von gasförmigen, flüssigen und festen Medien, insbesondere von kryogenen Fluiden, vorzugsweise von Sauerstoff und Wasserstoff, und mit einer Aufhängungsanordnung zur Lagerung des Tanks oder Druckbehälters an/in einer Tragstruktur (12), die ein Festlager (13) und ein Loslager (14) umfasst, **gekennzeichnet durch** eine Achse (2) oder Welle aus Titan, Aluminium oder einer Legierung daraus, die über das Festlager (13) und das Loslager (14) der Trägerstruktur (12) abgestützt ist, wobei das Loslager (14) aus einer Gleitlageranordnung (1) aus Stahl oder Edelstahl gebildet ist, das einen Lageraußenring (7) und einen Lagerinnenring (8) umfasst, und wobei zwischen der Gleitlageranordnung (1) und der Achse (2) der Welle ein Zwischenelement (3) oder eine Zwischenschicht angeordnet ist, das/die vollständig oder wenigstens teilweise aus einer in Sinterbronze eingebetteten PTFE/Faser-Mischung ausgebildet ist und eine geringere Härte als die Achse (2) oder Welle aus Titan, Aluminium oder einer Legierung daraus aufweist zur Vermeidung einer Kaltverschweißung der der Achse (3) oder Welle zugeordneten Oberfläche der Gleitlageranordnung (1) mit der Achse (3) oder Welle unter Bedingungen, wie sie in der Luft- und Raumfahrt auftreten.

2. Behälter nach Anspruch 1, **dadurch gekennzeichnet, dass** die Sinterbronze des Zwischenelementes (3) eine Zinn-Kupfer-Bronze ist.

3. Behälter nach Anspruch 1 oder 2, **dadurch gekennzeichnet, dass** die Fasern der PTFE/Faser-Mischung des Zwischenelementes (3) Glas- oder Keramikfasern sind.

4. Behälter nach einem der Ansprüche 1 bis 3, **dadurch gekennzeichnet, dass** das Zwischenelement (3) Glas- oder Keramikfasern umfasst.

5. Behälter nach einem der Ansprüche 1 bis 4, **dadurch gekennzeichnet, dass** das Zwischenelement (3) als Buchse (4) oder Hülse ausgebildet ist.

6. Behälter nach einem der Ansprüche 1 bis 5, **dadurch gekennzeichnet, dass** das Zwischenelement (3) als Schicht an einer der Achse (2) oder Welle zugewandten Oberfläche (6; 5) der Gleitlageranordnung (1) oder der Buchse (4) oder Hülse angebracht ist.

7. Behälter nach einem der Ansprüche 1 bis 6, **dadurch gekennzeichnet, dass** der Lageraußenring (7) eine wenigstens teilweise sphärisch gekrümmte Innenfläche (9) und der Lagerinnenring (8) eine wenigstens teilweise sphärisch gekrümmte Außenfläche (10) aufweist, derart, dass die Achse (2) oder Welle axial und/oder lateral beweglich gelagert ist.

8. Behälter nach einem der Ansprüche 1 bis 6, **dadurch gekennzeichnet, dass** das Lagerelement (1) einen Lageraußenring (7) mit einer wenigstens teilweise sphärisch gekrümmten Innenfläche (9) umfasst und das Zwischenelement (3) einen zu dem Lageraußenring (7) korrespondierenden Lagerinnenring (8) mit einer wenigstens teilweise sphärisch gekrümmten Außenfläche (10) bildet, derart, dass die Achse (2) oder Welle axial und/oder lateral beweglich gelagert ist.

9. Behälter nach einem der Ansprüche 1 bis 8, **dadurch gekennzeichnet, dass** die Achse (2) oder Welle hohlprofiliert ausgebildet ist.

10. Behälter nach Anspruch 9, **dadurch gekennzeichnet, dass** die hohlprofilierte Achse (2) Teil des Behälters (11), insbesondere der Tankbefüllungs- und Tankentleerungsstutzen, ist.

11. Verwendung eines Behälters, insbesondere eines Druckbehälters, Tanks oder Hochdrucktanks, zum Aufnehmen, Speichern und Abgeben von gasförmigen, flüssigen und festen Medien, insbesondere von kryogenen Fluiden, vorzugsweise von Sauerstoff und Wasserstoff, nach einem der vorhergehenden Ansprüche in Verbindung mit sogenannten Satellitentanks für die Luft- und Raumfahrt.

12. Verwendung eines Behälters, insbesondere eines Druckbehälters, Tanks oder Hochdrucktanks, zum Aufnehmen, Speichern und Abgeben von gasförmigen, flüssigen und festen Medien, insbesondere von kryogenen Fluiden, vorzugsweise von Sauerstoff und Wasserstoff, nach einem der vorhergehenden Ansprüche in Fahrzeugen, insbesondere in Luftfahrzeugen oder Fluggeräten der Luft- und Raumfahrt, vorzugsweise in Flugzeugen und Raumflugkörpern, insbesondere in Wasserfahrzeugen, vorzugsweise in einem U-Boot oder Luftkissenfahrzeug (Hovercraft), oder insbesondere in Landfahrzeugen, vorzugsweise in einem Personenkraftwagen, Lastkraftwagen oder Wohnmobil.

13. Verwendung eines Behälters, insbesondere eines Druckbehälters, Tanks oder Hochdrucktanks, zum Aufnehmen, Speichern und Abgeben von gasförmigen, flüssigen und festen Medien, nach einem der vorhergehenden Ansprüche in Luftfahrzeugen oder Fluggeräten der Luft- und Raumfahrt, vorzugsweise in Flugzeugen und Raumflugkörpern, Raketen und/oder Satelliten, oder in besonders reinen oder sauberen Umgebungen, insbesondere im Vakuum oder in einem Reinraum.

## Claims

1. Tank or pressure vessel, in particular high-pressure tank, for receiving, storing and dispensing gaseous, liquid and solid media, in particular cryogenic liquids, preferably oxygen and hydrogen, and with a suspension arrangement to support the tank or pressure vessel against/in a support structure (12) that comprises a fixed bearing (13) and a floating bearing (14), **characterised by** an axle (2) or shaft made of titanium, aluminium or an alloy of those that is supported via the fixed bearing (13) and the floating bearing (14) of the support structure (12), the floating bearing (14) being formed of a plain bearing arrangement (1) made of steel or stainless steel that comprises an outer bearing ring (7) and an inner bearing ring (8), and wherein an intermediate element (3) or intermediate layer is arranged between the plain bearing arrangement (1) and the axle (2) or the shaft, the intermediate element (3) or intermediate layer being made fully or at least partially of a PTFE/fibre mix embedded in sintered bronze and having a lower hardness than the axle (2) or shaft made of titanium, aluminium or an alloy of those to prevent the surface of the plain bearing arrangement (1) associated to the axle (2) or shaft from being cold-welded to the axle (2) or shaft under conditions as they may occur in aerospace applications.

2. Vessel according to claim 1, **characterised in that** the sintered bronze of the intermediate element (3) is a tin copper bronze.

3. Vessel according to claim 1 or 2, **characterised in that** the fibres of the PTFE/fibre mix of the intermediate element (3) are glass or ceramic fibres.

4. Vessel according to any of the claims 1 to 3, **characterised in that** the intermediate element (3) comprises glass or ceramic fibres.

5. Vessel according to any of the claims 1 to 4, **characterised in that** the intermediate element (3) is designed as a bushing (4) or sleeve.

6. Vessel according to any of the claims 1 to 5, **characterised in that** the intermediate element (3) is attached as layer on a surface (6; 5) of the plain bearing arrangement (1) or of the bushing (4) or sleeve facing the axle (2) or shaft.

7. Vessel according to any of the claims 1 to 6, **characterised in that** the outer bearing ring (7) has an at least partially spherically curved inner surface (9) and the inner bearing ring (8) has an at least partially spherically curved outer surface (10) in such a way that the axle (2) or shaft is mounted permitting axial and/or lateral movement.

8. Vessel according to any of the claims 1 to 6, **characterised in that** the bearing element (1) comprises an outer bearing ring (7) with an at least partially spherically curved inner surface (9), and the intermediate element (3) forms an inner bearing ring (8) corresponding to the outer bearing ring (7) with an at least partially spherically curved outer surface (10) in such a way that the axle (2) or shaft is mounted permitting axial and/or lateral movement.

9. Vessel according to any of the claims 1 to 8, **characterised in that** the axle (2) or shaft is designed as a hollow profile.

10. Vessel according to claim 9, **characterised in that** the hollow-profiled axle (2) is part of the vessel (11), in particular of the tank filling and tank draining nozzles.

11. Use of a vessel, in particular of a pressure vessel, tank or high-pressure tank, for receiving, storing and dispensing gaseous, liquid and solid media, in particular cryogenic liquids, preferably oxygen and hydrogen, according to any of the previous claims in connection with so-called satellite tanks for aerospace applications.

12. Use of a vessel, in particular of a pressure vessel, tank or high-pressure tank, for receiving, storing and dispensing gaseous, liquid and solid media, in particular cryogenic fluids, preferably oxygen and hydrogen, according to any of the previous claims, in vehicles, in particular in aircraft or aerospace aircraft, preferably in aeroplanes and spacecraft, in particular in watercraft, preferably in a submarine or air cushion craft (hovercraft), or in particular in land vehicles, preferably in a motor car, truck or camper van.

13. Use of a vessel, in particular of a pressure vessel, tank or high-pressure tank, for receiving, storing and dispensing gaseous, liquid and solid media, according to any of the previous claims, in aircraft or aerospace aircraft, preferably in aeroplanes and spacecraft, rockets and/or satellites, or in specially clean environments, in particular in a vacuum or clean room.

## Revendications

1. Réservoir ou récipient sous pression, en particulier réservoir sous haute pression, destiné à recevoir, stocker et distribuer des milieux gazeux, liquides et solides, en particulier des fluides cryogéniques, de préférence de l'oxygène et de l'hydrogène, et comportant un dispositif de suspension pour monter le réservoir ou le récipient sous pression sur/dans une structure porteuse (12) qui comprend un palier fixe (13) et un palier fou (14), **caractérisé par** un axe (2) ou un arbre en titane, en aluminium ou en un alliage de ceux-ci qui est supporté par le palier fixe (13) et par le palier fou (14) de la structure porteuse (12), le palier fou (14) étant formé à partir d'un agencement formant palier coulissant (1) en acier ou en acier inoxydable qui comprend une bague extérieure de palier (7) et une bague intérieure de palier (8), un élément intermédiaire (3) ou une couche intermédiaire étant agencé(e) entre l'agencement formant palier coulissant (1) et l'axe (2) ou l'arbre, qui est constitué(e) complètement ou au moins partiellement d'un mélange de PTFE et de fibres noyé dans du bronze fritté et qui présente une dureté inférieure à celle de l'axe (2) ou de l'arbre en titane, en aluminium ou en un alliage de ceux-ci, afin d'éviter un soudage à froid de la surface de l'agencement formant palier coulissant (1), associée à l'axe (2) ou à l'arbre, avec l'axe (2) ou l'arbre dans des conditions telles qu'elles se produisent dans l'aéronautique et l'aérospatiale.

2. Récipient selon la revendication 1, **caractérisé en ce que** le bronze fritté de l'élément intermédiaire (3) est un bronze d'étain et de cuivre.

3. Récipient selon la revendication 1 ou 2, **caractérisé en ce que** les fibres du mélange de PTFE/fibres de l'élément intermédiaire (3) sont des fibres de verre ou de céramique.

4. Récipient selon l'une des revendications 1 à 3, **caractérisé en ce que** l'élément intermédiaire (3) comprend des fibres de verre ou de céramique.

5. Récipient selon l'une des revendications 1 à 4, **caractérisé en ce que** l'élément intermédiaire (3) est réalisé sous forme de douille (4) ou de manchon.

6. Récipient selon l'une des revendications 1 à 5, **caractérisé en ce que** l'élément intermédiaire (3) est rapporté sous forme de couche sur une surface (6 ; 5), tournée vers l'axe (2) ou vers l'arbre, de l'agencement formant palier coulissant (1) ou de la douille (4) ou du manchon.

7. Récipient selon l'une des revendications 1 à 6, **caractérisé en ce que** la bague extérieure de palier (7) comporte une surface intérieure (9) présentant au moins partiellement une courbure sphérique et la bague intérieure de palier (8) comporte une surface extérieure (10) présentant au moins partiellement une courbure sphérique, de telle sorte que l'axe (2) ou l'arbre est monté de façon déplaçable axialement et/ou latéralement.

8. Récipient selon l'une des revendications 1 à 6, **caractérisé en ce que** l'élément de palier (1) comprend une bague extérieure de palier (7) avec une surface intérieure (9) présentant au moins partiellement une courbure sphérique, et l'élément intermédiaire (3) forme une bague intérieure de palier (8), correspondant à la bague extérieure de palier (7), avec une surface extérieure (10) présentant au moins partiellement une courbure sphérique, de telle sorte que l'axe (2) ou l'arbre est monté de façon déplaçable axialement et/ou latéralement.

9. Récipient selon l'une des revendications 1 à 8, **caractérisé en ce que** l'axe (2) ou l'arbre est réalisé sous la forme d'un profilé creux.

10. Récipient selon la revendication 9, **caractérisé en ce que** l'axe (2) en profilé creux fait partie du récipient (11), en particulier des pipes de remplissage et de vidage de réservoir.

11. Utilisation d'un récipient, en particulier d'un récipient sous pression, d'un réservoir ou d'un réservoir haute pression, destiné à recevoir, stocker et distribuer des milieux gazeux, liquides et solides, en particulier des fluides cryogéniques, de préférence de l'oxygène et de l'hydrogène, selon l'une des revendications précédentes en association avec des réservoirs dits satellites pour l'aéronautique et l'aérospatiale.

12. Utilisation d'un récipient, en particulier d'un récipient sous pression, d'un réservoir ou d'un réservoir haute pression, destiné à recevoir, stocker et distribuer des milieux gazeux, liquides et soldes, en particulier des fluides cryogéniques, de préférence de l'oxygène et de l'hydrogène, selon l'une des revendications précédentes dans des véhicules, en particulier dans des aéronefs ou des engins volants de l'aéronautique et de l'aérospatiale, en particulier dans des avions et dans des engins spatiaux, en particulier dans des véhicules marins, de préférence un sous-marin ou un véhicule sur coussin d'air (Hovercraft) ou en particulier dans des véhicules terrestres, de préférence des automobiles, des poids-lourds ou des camping cars.

13. Utilisation d'un récipient, en particulier d'un récipient sous pression, d'un réservoir ou d'un réservoir haute pression, destiné à recevoir, stocker et distribuer des milieux gazeux, liquides et solides, selon l'une des revendications précédentes dans des aéronefs ou des engins volants de l'aéronautique et de l'aérospatiale, de préférence dans des avions et des engins spatiaux, des fusées et/ou des satellites, ou dans des environnements particulièrement purs ou propres, en particulier sous vide ou dans une salle blanche.
